# EUROPEAN PATENT APPLICATION

(11) **EP 1 657 932 A1**
(43) Date of publication of application: **17.05.2006**
(21) Application number: 05256418.4
(22) Date of filing: 15.10.2005
(51) Int. Cl.: H04N 7/26

(54) **Video coding and decoding methods using interlayer filtering and video encoder and decoder using the same**

(30) Priority: 18.10.2004 US 619023 P; 18.11.2004 KR 2004094597
(71) Applicant: Samsung Electronics Co., Ltd., Suwon-si, Gyeonggi-Do (KR)
(72) Inventor: Han, Woo-jin, No. 108-703 Jugong 2-danji Apt., Suwon-si Gyeonggi-do (KR); Lee, Bae-keun, Bucheon-si Gyeonggi-do (KR); Lee, Jae-young, No. 6-1305 Woncheon Samsung Apt., Suwon-si Gyeonggi-do (KR); Cha, Sang-chang, No. 103-1503 Remian, Hwaseong-si Gyeonggi-do (KR); Ha, Ho-jin, Seoul (KR); Lee, Kyo-hyuk, Seoul (KR)
(74) Representative: Waddington, Richard

(57) **Abstract**

Video coding and decoding methods using interlayer filtering and a video encoder and decoder using the same are provided. Multi-layer video coding employing a plurality of video coding algorithms can improve video coding efficiency by using interlayer filtering. The video coding method includes encoding video frames using a first video coding scheme (410), performing interlayer filtering on the frames encoded by the first video coding scheme (440), encoding the video frames using a second video coding scheme by referring to the frames subjected to the interlayer filtering (420), and generating a bitstream containing the frames encoded by the first and second video coding schemes (430).

## Description

Apparatuses and methods consistent with the present invention relate to a multi-layer video coding technique, and more particularly, to a video coding technique using interlayer filtering.

With the development of communication technology including Internet, video communication as well as text and voice communication has increased. Conventional text communication cannot satisfy the various demands of users, and thus multimedia services that can provide various types of information such as text, pictures, and music have increased. Multimedia data requires a large capacity storage medium and a wide bandwidth for transmission since the amount of data is usually large. For example, a 24-bit true color image having a resolution of 640*480 needs a capacity of 640*480*24 bits, i.e., data of about 7.37 Mbits per frame. When a video composed of such images is transmitted at a speed of 30 frames per second, a bandwidth of 221 Mbits/sec is required. When a 90-minute movie based on such an image is stored, a storage space of about 1200 Gbits is required. Accordingly, a compression coding method is a requisite for transmitting multimedia data.

A basic principle of multimedia data compression is removing data redundancy. In other words, video data can be compressed by removing spatial, temporal and visual redundancy. Spatial redundancy occurs when the same color or object is repeated in an image. Temporal redundancy occurs when there is little change between adjacent frames in a moving image or the same sound is repeated in audio. The removal of visual redundancy takes into account the limitations of human eyesight and the limited perception of high frequency.

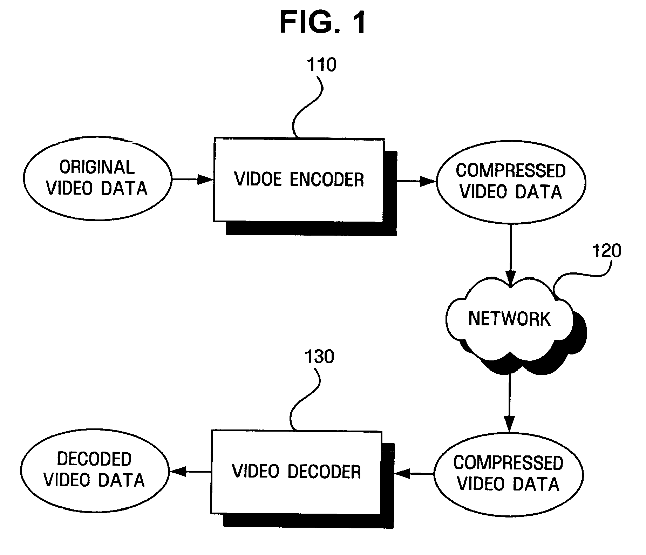

FIG. 1 shows an environment in which video compression is applied.

Video data is compressed by a video encoder 110. Currently known Discrete Cosine Transform (DCT)-based video compression algorithms are MPEG-2, MPEG-4, H.263, and H.264. In recent years, research into wavelet-based scalable video coding has been actively conducted. Compressed video data is sent to a video decoder 130 via a network 120. The video decoder 130 decodes the compressed video data to reconstruct the original video data.

The video encoder 110 compresses the original video data so it does not exceed the available bandwidth of the network 120. However, communication bandwidth may vary depending on the type of the network 120. For example, the available communication bandwidth of Ethernet is different from that of a wireless local area network (WLAN). A cellular communication network may have a very narrow bandwidth. Thus, research is being actively conducted into a method for generating video data compressed at various bit-rates from the same compressed video data, in particular, scalable video coding.

Scalable video coding is a video compression technique that enables video data to provide scalability. Scalability is the ability to generate video sequences at different resolutions, frame rates, and qualities from the same compressed bitstream. Temporal scalability can be provided using a Motion Compensation Temporal Filtering (MCTF), Unconstrained MCTF (UMCTF), or Successive Temporal Approximation and Referencing (STAR) algorithm. Spatial scalability can be achieved by a wavelet transform algorithm or multi-layer coding, which have been actively studied in recent years. Signal-to-Noise Ratio (SNR) scalability can be obtained using Embedded ZeroTrees Wavelet (EZW), Set Partitioning in Hierarchical Trees (SPIHT), Embedded ZeroBlock Coding (EZBC), or Embedded Block Coding with Optimized Truncation (EBCOT).

Multi-layer video coding algorithms have recently been adopted for scalable video coding. While conventional multi-layer video coding usually uses a single video coding algorithm, increasing attention has been recently directed to multi-layer video coding using a plurality of video coding algorithms.

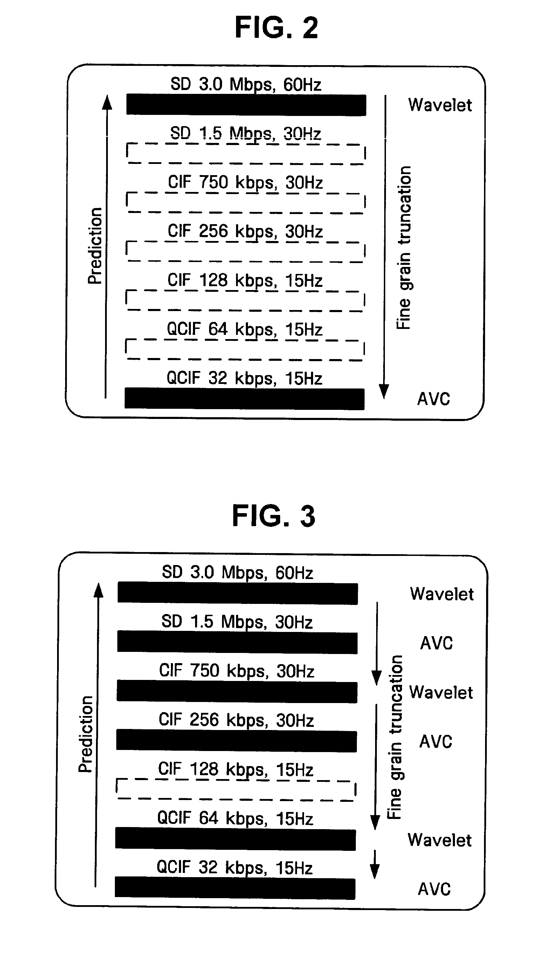

FIGS. 2 and 3 illustrate examples of bitstreams generated by multi-layer video coding.

Referring to FIG. 2, a video encoder uses both a MPEG-4 Advanced Video Coding (AVC) algorithm offering excellent coding efficiency and a wavelet coding technique providing excellent scalability. When a video encoder performs encoding using only wavelet coding, video quality tends to be significantly degraded at a low resolution. Thus, the bitstream shown in FIG. 2 contains AVC-coded lowest-resolution layer frames and highest-resolution layer frames wavelet-coded using the AVC-coded lowest-layer frames. The frame used as a reference during encoding is a frame reconstructed by decoding a frame encoded by AVC coding.

Referring to FIG. 3, a video encoder uses both wavelet coding offering the excellent scalability and AVC coding providing high coding efficiency. While the bitstream shown in FIG. 2 has only two wavelet-coded and AVC-coded layers, the bitstream shown in FIG. 3 has a wavelet-coded layer and an AVC- coded layer for each resolution.

Multi-layer video coding has a problem in that the coding efficiency of an enhancement layer tends to be low due to quantization noise in the previously encoded layer (base layer). In particular, the problem is more severe when multi-layer video coding uses a plurality of video coding algorithms having different characteristics. For example, using both DCT-based AVC coding and wavelet-based coding as shown in FIG. 2 or 3 may degrade the coding efficiency in a wavelet layer.

The present invention provides video coding and decoding methods using interlayer filtering, designed to improve the efficiency of multi-layer video coding, and video encoders and decoders.

The above stated object as well as other objects, features and advantages, of the present invention will become clear to those skilled in the art upon review of the following description.

According to the present invention there is provided an apparatus and method as set forth in the appended claims. Preferred features of the invention will be apparent from the dependent claims, and the description which follows.

According to an aspect of the present invention, there is provided a video coding method including encoding video frames using a first video coding scheme, performing interlayer filtering on the frames encoded by the first video coding scheme, encoding the video frames using a second video coding scheme by referring the frames subjected to the interlayer filtering, and generating a bitstream containing the frames encoded by the first and second video coding schemes.

According to another aspect of the present invention, there is provided a video coding method including downsampling video frames to generate video frames of low resolution, encoding the low-resolution video frames using a first video coding scheme, upsampling the frames encoded by the first video coding scheme to the resolution of the video frames, performing interlayer filtering on the upsampled frames, encoding the video frames using a second video coding scheme by referring the frames subjected to the interlayer filtering, and generating a bitstream containing the frames encoded by the first and second video coding schemes.

According to still another aspect of the present invention, there is provided a video encoder including a first video coding unit for encoding video frames using a first video coding scheme, an interlayer filter for performing interlayer filtering on the frames encoded by the first video coding scheme, a second video coding unit for encoding the video frames using a second video coding scheme by referring the interlayer filtered frames, and a bitstream generator for generating a bitstream containing the frames encoded by the first and second video coding schemes.

According to a further aspect of the present invention, there is provided a video encoder including a downsampler for downsampling video frames to generate video frames of low resolution, a first video coding unit for encoding the low-resolution video frames using a first video coding scheme, an upsampler for upsampling the frames encoded by the first video coding scheme, an interlayer filter for performing interlayer filtering on the upsampled frames, a second video coding unit for encoding the video frames using a second video coding scheme by referring the interlayer filtered frames, and a bitstream generator for generating a bitstream containing the frames encoded by the first and second video coding schemes.

According to yet another aspect of the present invention, there is provided a video decoding method including extracting frames encoded by first and second video coding schemes from a bitstream, decoding the frames encoded by the first video coding scheme using a first video decoding scheme and reconstructing first layer frames, performing interlayer filtering on the reconstructed first layer frames, and decoding the frames encoded by the second video coding scheme using a second video decoding scheme by referring the interlayer filtered first layer frames and reconstructing second layer frames.

According to yet another aspect of the present invention, there is provided a video decoding method including extracting frames encoded by first and second video coding schemes from a bitstream, decoding the frames encoded by the first video coding scheme using a first video decoding scheme and reconstructing first layer frames, upsampling the reconstructed first layer frames, performing interlayer filtering on the upsampled first layer frames, and decoding the frames encoded by the second video coding scheme using a second video decoding scheme by referring the interlayer filtered first layer frames and reconstructing second layer frames.

According to yet another aspect of the present invention, there is provided a video decoder including a bitstream interpreter for extracting frames encoded by first and second video coding schemes from a bitstream, a first video decoding unit for decoding the frames encoded by the first video coding scheme by referring a first video decoding scheme and reconstructing first layer frames, an interlayer filter for performing interlayer filtering on the reconstructed first layer frames, and a second video decoding unit for decoding the frames encoded by the second video coding scheme using a second video decoding scheme by referring the interlayer filtered first layer frames and reconstructing second layer frames.

According to yet another aspect of the present invention, there is provided a video decoder including a video decoder including a bitstream interpreter for extracting frames encoded by first and second video coding schemes from a bitstream, a first video decoding unit for decoding the frames encoded by the first video coding scheme using a first video decoding scheme and reconstructing first layer frames, an upsampler for upsampling the reconstructed first layer frames, an interlayer filter for performing interlayer filtering on the upsampled first layer frames, and a second video decoding unit for decoding the frames encoded by the second video coding scheme using a second video decoding scheme by referring to the interlayer filtered first layer frames and reconstructing second layer frames.

For a better understanding of the invention, and to show how embodiments of the same may be carried into effect, reference will now be made, by way of example, to the accompanying diagrammatic drawings in which:
FIG. 1 shows an environment in which video compression is applied;
FIGS. 2 and 3 show example structures of bitstreams generated by multi-layer video coding;
FIG. 4 is a block diagram of a video encoder according to a first exemplary embodiment of the present invention;
FIG. 5 is a block diagram of a video encoder according to a second exemplary embodiment of the present invention;
FIG. 6 is a block diagram of a temporal filter according to an exemplary embodiment of the present invention;
FIG. 7 is a flowchart illustrating a video coding process according to an exemplary embodiment of the present invention;
FIG. 8 is a flowchart illustrating a detailed process of encoding a second layer according to an exemplary embodiment of the present invention;
FIG. 9 is a block diagram of a video decoder according to a first exemplary embodiment of the present invention;
FIG. 10 is a block diagram of a video decoder according to a second exemplary embodiment of the present invention;
FIG. 11 is a block diagram of an inverse temporal filter according to an exemplary embodiment of the present invention;
FIG. 12 is a flowchart illustrating a video decoding process according to an exemplary embodiment of the present invention; and
FIG. 13 is a flowchart illustrating a detailed process of performing inverse temporal filtering on a second layer according to an exemplary embodiment of the present invention.

Aspects of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of the invention are shown. For convenience of explanation, it is assumed that a video encoder has two coding units for two layers.

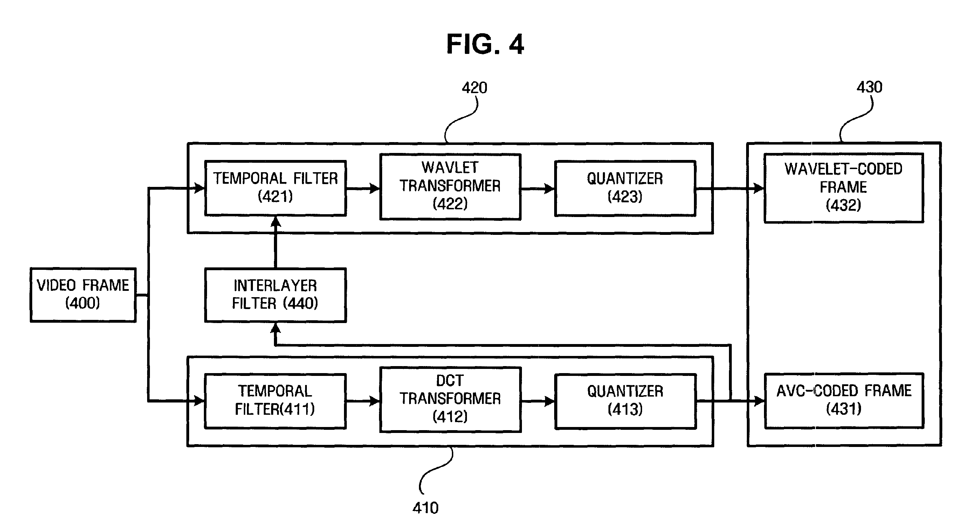

FIG. 4 is a block diagram of a video encoder according to a first exemplary embodiment of the present invention.

Referring to FIG. 4, a video encoder according to a first exemplary embodiment of the present invention includes a first video coding unit 410 a second video coding unit 420, a bitstream generator 430, and an interlayer filter 440.

The first coding unit 410 includes a temporal filter 411, a Discrete Cosine Transform (DCT) transformer 412, and a quantizer 413 and encodes a video frame using advanced video coding (AVC).

The temporal filter 411 receives a video frame 400 and removes temporal redundancy that the video frame 400 has with adjacent frames. The temporal filter 411 may use a Motion Compensated Temporal Filtering (MCTF) algorithm to remove temporal redundancy between frames. The MCTF algorithm supporting temporal scalability removes temporal redundancy between adjacent frames. A 5/3 filter is widely used for MCTF. Other temporal filtering algorithms supporting temporal scalability, such as Unconstrained MCTF (UMCTF) or Successive Temporal Approximation and Referencing (STAR), may be used.

The DCT transformer 412 performs DCT on the temporally filtered frame. The DCT is performed for each block of a predetermined size (8*8 or 4*4). The entropy of a block subjected to DCT is reduced compared with that of a block before DCT.

The quantizer 413 quantizes the DCT-transformed frame. In AVC, quantization is determined based on a quantization parameter (Qp). The quantized frame is inserted into a bitstream after being subjected to scanning and entropy coding.

The second video coding unit 420 includes a temporal filter 421, a wavelet transformer 422, and a quantizer 423 and encodes a video frame using wavelet coding.

The temporal filter 421 receives a video frame 400 and removes temporal redundancy that the video frame 400 has with adjacent frames. The temporal filter 421 may use an MCTF algorithm to remove the temporal redundancy between frames. The MCTF algorithm supporting temporal scalability removes temporal redundancy between adjacent frames. Other temporal filtering algorithms supporting temporal scalability, such as UMCTF or STAR, may be used.

The wavelet transformer 422 performs a wavelet transform on the temporally filtered frame on a frame-by-frame basis. The wavelet transform algorithm supporting spatial scalability decomposes a frame into one low-pass subband (LL) and three high-pass subbands (LH, HL, and HH). The LL subband is a quarter size of and an approximation of the original frame before being subjected to wavelet transform. The wavelet transform is again performed to decompose the LL subband into one low-pass subband (LLLL) and three high-pass subbands (LLLH, LLHL, and LLHH). The LLLL subband is a quarter size of and an approximation of the LL subband. A 9/7 filter is commonly used for the wavelet transform.

The quantizer 423 quantizes the wavelet-transformed frame. The quantization is performed using an embedded quantization algorithm such as Embedded ZeroTrees Wavelet (EZW), Set Partitioning in Hierarchical Trees (SPIHT), Embedded ZeroBlock Coding (EZBC), or Embedded Block Coding with Optimized Truncation (EBCOT) offering Signal-to-Noise Ratio (SNR) scalability.

The temporal filter 421 removes temporal redundancy that exists in the video frame 400 using adjacent frames or the frame encoded by the first video coding unit 410 as a reference. Block-based DCT, performed before quantization, may cause block artifacts, which degrade the efficiency of wavelet coding performed by the second video coding unit 420. That is, a frame having block artifacts may degrade the wavelet coding efficiency since block artifacts such as noise propagate across the entire frame when the frame is subjected to a wavelet transform.

Thus, the video encoder of FIG. 4 further includes the interlayer filter 440 to eliminate noise generated between layers. The interlayer filter 440 performs filtering in such a way that a frame encoded by a first video coding method is suitably used as a reference for a second video coding method. Interlayer filtering is needed when different video coding schemes are used for each layer as shown in the video encoder of FIG. 4.

The interlayer filter 440 performs filtering on a frame encoded by DCT-based AVC coding such that it can be suitably used as a reference for wavelet coding. To accomplish this, the interlayer filter downsamples the AVC-coded frame with an MPEG (or other) filter after upsampling the same with a wavelet filter; however, this is merely exemplary. Rather, a downsampling filter in the interlayer filter 440 may be a low-pass filter showing a steep gradient at a cut-off frequency. The interlayer filter 440 may be any single or plurality of filters designed such that the frame subjected to interlayer filtering can be suitably used as a reference by the second video coding unit 420.

The bitstream generator 430 generates a bitstream containing an AVC-coded frame 431, a wavelet-coded frame 432, motion vectors, and other necessary information.

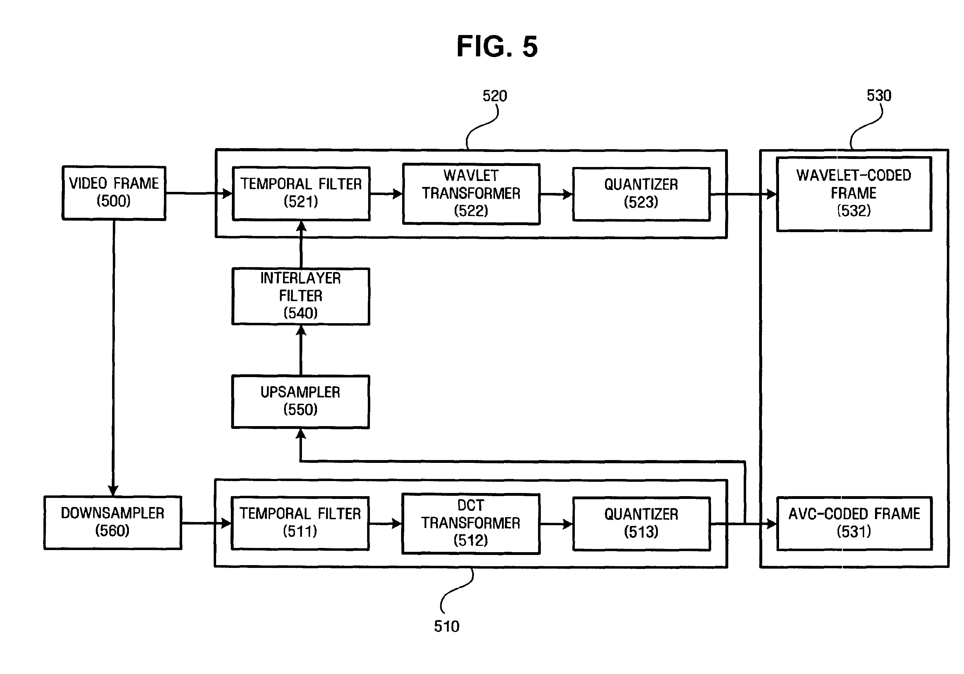

FIG. 5 is a block diagram of a video encoder according to a second exemplary embodiment of the present invention.

Referring to FIG. 5, the video encoder includes a first video coding unit 510, a second video coding unit 520, a bitstream generator 530, an interlayer filter 540, an upsampler 550, and a downsampler 560. The video encoder encodes a video frame and a low-resolution video frame using different video coding schemes. Specifically, the downsampler 560 downsamples a video frame 500 to generate a low-resolution video frame.

The first video coding unit 510 includes a temporal filter 511, a DCT transformer 512, and a quantizer 513 and encodes the low-resolution video frame using AVC coding.

The temporal filter 511 receives the low-resolution video frame and removes temporal redundancy that the low-resolution frame has with adjacent low-resolution frames. The temporal filter 511 uses an MCTF algorithm, which supports temporal scalability, to remove temporal redundancy between low-resolution frames. A 5/3 filter is widely used for MCTF, but other temporal filtering algorithms supporting temporal scalability such as UMCTF or STAR may be used.

The DCT transformer 512 performs DCT on the temporally filtered frame. The DCT is performed for each block of a predetermined size (8*8 or 4*4). The entropy of a block subjected to DCT is reduced compared with that of a block before DCT.

The quantizer 513 quantizes the DCT-transformed frame. In AVC, quantization is determined based on a quantization parameter (Qp). The quantized frame is inserted into a bitstream after being subjected to reordering and entropy coding.

The upsampler 550 upsamples the AVC-coded frame to the resolution of the frame 500.

The interlayer filter 540 performs filtering in such a manner that an upsampled version of a frame can be suitably used as a reference for wavelet coding. In an exemplary embodiment of the present invention, the upsampled version of the frame may be upsampled with a wavelet filter, followed by downsampling using an MPEG filter; however, this is merely exemplary. Rather, a downsampling filter in the interlayer filter 540 may be a low-pass filter showing a steep gradient at a cut-off frequency. The interlayer filter 540 may be any single or plurality of filters designed such that the frame subjected to interlayer filtering can be suitably used as a reference by the second video coding unit 520.

The second video coding unit 520 includes a temporal filter 521, a wavelet transformer 522, and a quantizer 523, and it encodes a video frame using wavelet coding.

The temporal filter 521 receives the video frame 500 and removes temporal redundancy that the video frame 500 has with adjacent frames. In an exemplary embodiment of the present invention, the temporal filter 521 uses an MCTF algorithm to remove temporal redundancy between low-resolution frames. The MCTF algorithm supporting temporal scalability removes temporal redundancy between adjacent low-resolution frames. Other temporal filtering algorithms supporting temporal scalability such as UMCTF or STAR may be used.

The wavelet transformer 522 performs a wavelet transform on the temporally filtered frame. Unlike the DCT transform that is performed in units of blocks, the wavelet transform is performed in units of frames. The wavelet transform algorithm supporting spatial scalability decomposes a frame into one low-pass subband (LL) and three high-pass subbands (LH, HL, and HH). The LL subband is a quarter of the size of and an approximation of the original frame before being subjected to wavelet transform. The wavelet transform is again performed to decompose the LL subband into one low-pass subband (LLLL) and three high-pass subbands (LLLH, LLHL, and LLHH). The LLLL subband is a quarter of the size of and an approximation of the LL subband. A 9/7 filter is commonly used for the wavelet transform.

The quantizer 523 quantizes the wavelet-transformed frame. The quantization may be an embedded quantization algorithm, which provides SNR scalability, such as EZW, SPIHT, EZBC, or EBCOT.

The temporal filter 521 removes temporal redundancy that exists in the video frame 500 using adjacent frames or the frame encoded by the first video coding unit 510 as a reference. The frame encoded by the first video coding unit is upsampled and subjected to interlayer filtering before being sent to the temporal filter 521.

The bitstream generator 530 generates a bitstream containing an AVC-coded frame 531, a wavelet-coded frame 532, motion vectors, and other necessary information.

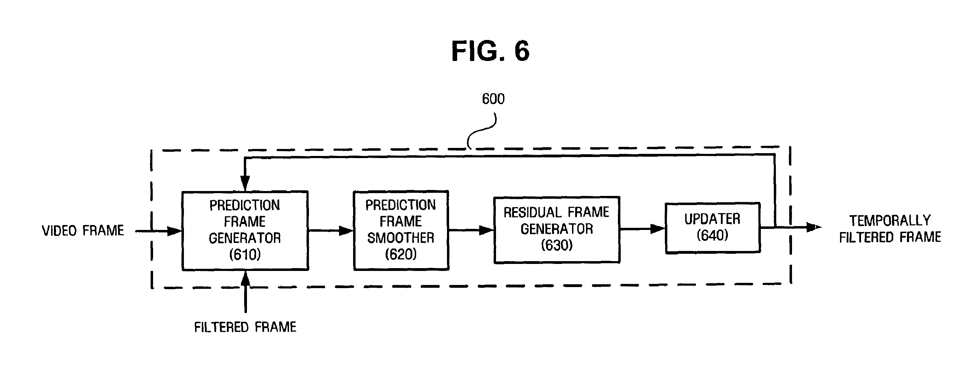

The temporal filter will be described in greater detail with reference to FIG. 6.

FIG. 6 is a block diagram of a temporal filter 600 according to an exemplary embodiment of the present invention.

While FIGS. 4 and 5 show that the first and second video coding units 410 (510) and 420 (520) include temporal filters 411 (511) and 421 (521), respectively, for convenience of explanation, it is assumed in an exemplary embodiment that the temporal filter 600 is employed in the second video coding unit 420.

The temporal filter 600 removes temporal redundancy between video frames using MCTF on a group-of-picture (GOP)-by-GOP basis. To accomplish this function, the temporal filter 600 includes a prediction frame generator 610 for generating a prediction frame, a prediction frame smoother 620 for smoothing the prediction frame, a residual frame generator 630 for generating a residual frame by comparing a smoothed prediction frame with a video frame, and an updater 640 for updating the video frame using the residual frame.

The prediction frame generator 610 generates a prediction frame that will be compared with a video frame in order to generate a residual frame using video frames adjacent to the video frame and a frame subjected to interlayer filtering as a reference. The prediction frame generator 610 finds a matching block for each block in the video frame within reference frames (adjacent video frames and a frame subjected to interlayer filtering) interceding or within another block in the video frame (intracoding).

The frame prediction smoother 620 smoothes a prediction frame since blocking artifacts are introduced at block boundaries in the prediction frame made up of blocks corresponding to blocks in the video frame. To accomplish this, the prediction frame smoother 620 may perform deblocking on pixels at block boundaries in the prediction frame. Since a de-blocking algorithm is commonly used in the H.264 video coding scheme and is well known in the art, a detailed explanation thereof will not be given.

The residual frame generator 630 compares the smoothed prediction frame with the video frame and generates a residual frame in which temporal redundancy has been removed.

The updater 640 uses the residual frame to update other video frames. The updated video frames are then provided to the prediction frame generator 610.

For example, when each GOP consists of eight video frames, the temporal filter 600 removes temporal redundancy in frames 1, 3, 5, and 7 to generate residual frames 1, 3, 5, and 7, respectively. The residual frames 1, 3, 5, and 7 are used to update frames 0, 2, 4, and 6. The temporal filter 600 removes the temporal redundancy from updated frames 2 and 6 to generate residual frames 2 and 6. The residual frames 2 and 6 are used to update frames 0 and 4. Then, the temporal filter 600 removes temporal redundancy in the updated frame 4 to generate a residual frame 4. The residual frame 4 is used to update the frame 0.

Through the above process, the temporal filter 600 performs temporal filtering on the eight video frames to obtain one low-pass frame (updated frame 0) and seven high-pass frames (residual frames 1 through 7).

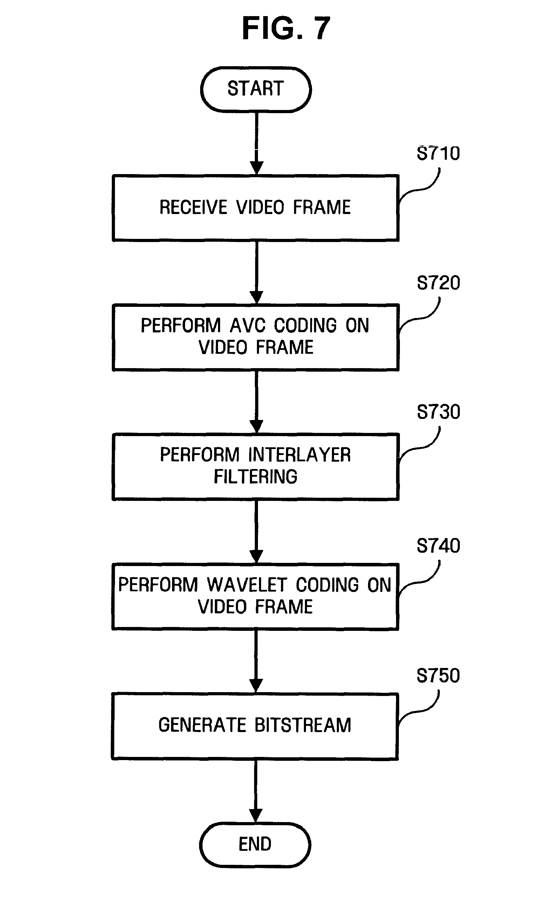

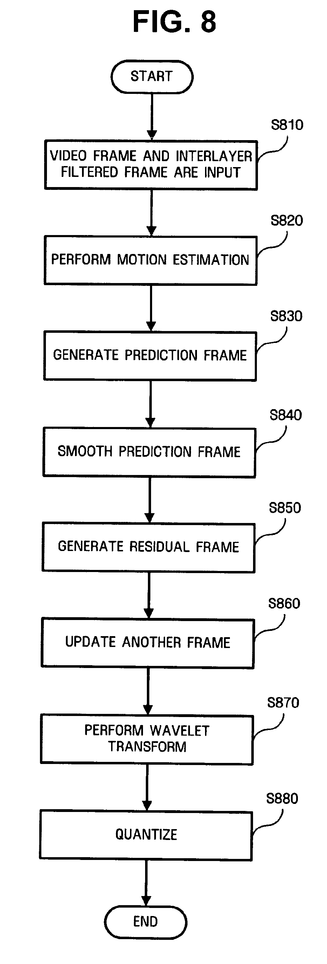

A video coding process and a temporal filtering will be described with reference to FIGS. 7 and 8. It is assumed that video coding is performed on two layers.

Referring first to FIG. 7, a video encoder receives a video frame in step S710.

In step S720, the video encoder encodes the input video frame using AVC coding. In the present exemplary embodiment, a first layer is encoded using AVC coding because the AVC coding offers the highest coding efficiency currently available. However, the first layer may be encoded using another video coding algorithm.

After the first layer is encoded, in step S730 the video encoder performs interlayer filtering on the AVC-coded frame so that it can be suitably used as a reference for encoding a second layer. The interlayer filtering involves upsampling the AVC-coded frame using a wavelet filter and downsampling an upsampled version of AVC-coded frame using an MPEG filter.

Following the interlayer filtering, in step S740 the video encoder performs wavelet coding on the video frame using the frame subjected to interlayer filtering as a reference.

After the wavelet coding is finished, in step S750 the video encoder generates a bitstream containing the AVC-coded frame and the wavelet-coded frame. When the first and second layers have different resolutions, the video encoder uses a low-resolution frame obtained by downsampling the input video frame during the AVC coding. After the AVC coding is finished, the video encoder changes the resolution of the AVC-coded frame. For example, when the resolution of the first layer is lower than that of the second layer, the video encoder upsamples the AVC-coded frame to the resolution of the second layer. Then, the video encoder performs interlayer filtering on the upsampled version of the AVC-coded frame.

FIG. 8 is a flowchart illustrating a detailed process of encoding a second layer according to an exemplary embodiment of the present invention.

Referring to FIG. 8, in step S810 a second video coding unit receives an encoded first layer video frame that has been subjected to interlayer filtering.

In step S820, upon receipt of the video frame and the frame subjected to interlayer filtering, the second video coding unit performs motion estimation in order to generate a prediction frame that will be used in removing temporal redundancy in the video frame. Various well-known algorithms such as Block Matching and Hierarchical Variable Size Block Matching (HVSBM) may be used for motion estimation.

In step S830, after performing the motion estimation, the second video coding unit uses motion vectors obtained as a result of the motion estimation to generate the prediction frame.

In step S840, the second video coding unit smoothes the prediction frame in order to reduce block artifacts in a residual frame. This is because an apparent block boundary degrades the coding efficiency during wavelet transform and quantization.

In step S850, the second video coding unit compares the prediction frame with the video frame to generate a residual frame. The residual frame corresponds to a high-pass frame (H frame) generated through MCTF.

In step S860, a temporal filter uses a residual frame to update another video frame. An updated version of the video frame corresponds to a low-pass frame (L frame).

After an L frame and H frame are generated on a GOP basis through steps S820 through S860, the second video coding unit performs wavelet transform on the temporally filtered frames (L and H frames) in step S870. While a 9/7 filter is commonly used for wavelet transform, an 11/9 or 13/11 filter may also be used.
In step S880, the second video coding unit quantizes the wavelet-transformed frames using EZW, SPIHT, EZBC, or EBCOT.

Next, a video decoder and a decoding process will be described. While the decoding process is basically performed in reverse order to the encoding process, layers are encoded and decoded in the same order. For example, when a video encoder sequentially encodes first and second layers, a video decoder decodes the first and second layers in the same order. For convenience of explanation, it is assumed that a video frame is reconstructed from a bitstream having two layers.

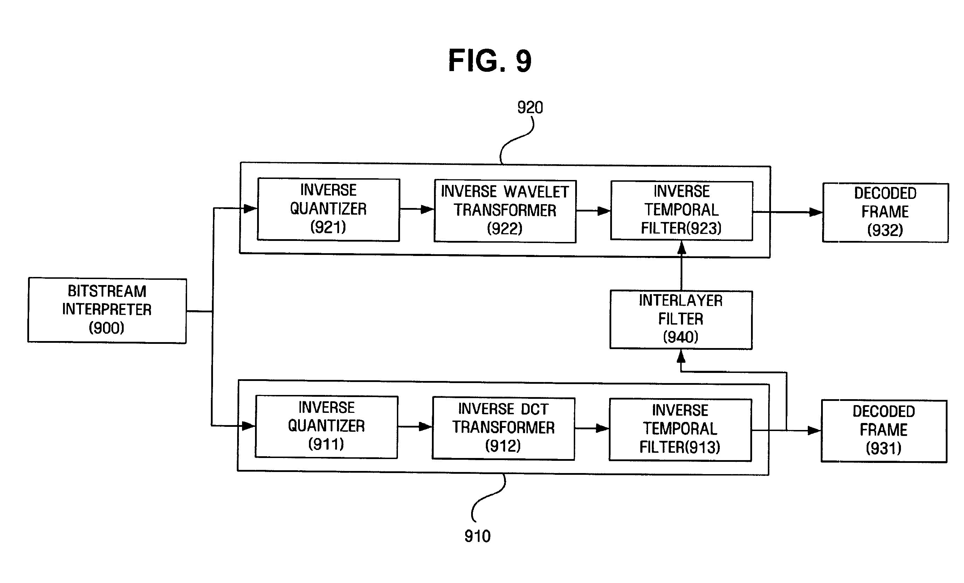

FIG. 9 is a block diagram of a video decoder according to a first exemplary embodiment of the present invention used when first and second layers have the same resolution.

Referring to FIG. 9, the video decoder includes a bitstream interpreter 900, a first video decoding unit 910, a second video decoding unit 920, and an interlayer filter 940.

The bitstream interpreter 900 interprets an input bitstream and extracts frames encoded by a first video coding and frames encoded by second video coding. The frames encoded by the first video coding are then provided to the first video decoding unit 910 while the frames encoded by the second video coding are provided to the second video decoding unit 920.

The first video decoding unit 910 includes an inverse quantizer 911, an inverse DCT transformer 912, and an inverse temporal filter 913. The inverse quantizer 911 quantizes the frames encoded by the first video coding.

The inverse quantization may involve entropy decoding, inverse scanning, and a process of reconstructing DCT-transformed frames using a quantization table.

The inverse DCT transformer 912 performs an inverse DCT transform on the inversely quantized frames.

The inverse temporal filter 913 reconstructs first layer video frames from the inversely DCT-transformed frames and outputs a decoded frame (931). The reconstructed first layer video frames are obtained by encoding original video frames at a low bit-rate and decoding the encoded frames.

The interlayer filter 940 performs interlayer filtering on the reconstructed first layer frame. The interlayer filtering may be performed using a deblocking algorithm.

The second video decoding unit 920 includes an inverse quantizer 921, an inverse wavelet transformer 922, and an inverse temporal filter 923.

The inverse quantizer 921 applies inverse quantization to the frames encoded by the second video coding. The inverse quantization may involve entropy decoding, inverse scanning, and a process of reconstructing wavelet-transformed frames using a quantization table.

The inverse wavelet transformer 922 performs an inverse wavelet transform on the inversely quantized frames.

The inverse temporal filter 923 reconstructs second layer video frames from the inversely wavelet-transformed frames using frames subjected to the interlayer filtering as a reference and outputs a decoded frame (932). The reconstructed second layer video frames are obtained by encoding original video frames at a high bit-rate and decoding the encoded frames.

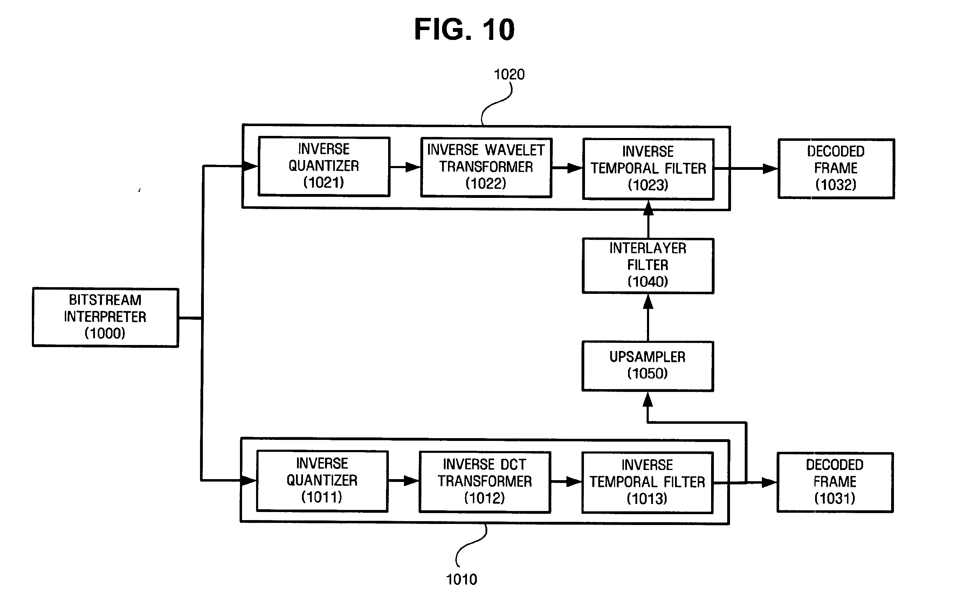

FIG. 10 is a block diagram of a video decoder according to a second exemplary embodiment of the present invention used when a first layer has lower resolution than a second layer. Referring to FIG. 10, the video decoder includes a bitstream interpreter 1000, a first video decoding unit 1010, a second video decoding unit 1020, an interlayer filter 1040, and an upsampler 1050.

The bitstream interpreter 1000 interprets an input bitstream and extracts frames encoded by a first video coding and frames encoded by second video coding. The frames encoded by the first video coding have lower resolution than those encoded by the second video coding. The former is then provided to the first video decoding unit 1010 while the latter is provided to the second video decoding unit 1020.

The first video decoding unit 1010 includes an inverse quantizer 1011, an inverse DCT transformer 1012, and an inverse temporal filter 1013.

The inverse quantizer 1011 inversely quantizes the frames encoded by the first video coding. The inverse quantization may involve entropy decoding, inverse scanning, and a process of reconstructing DCT-transformed frames using a quantization table.

The inverse DCT transformer 1012 performs an inverse DCT transform on the inversely quantized frames.

The inverse temporal filter 1013 reconstructs first layer video frames from the inversely DCT-transformed frames and outputs a decoded frame (1031). The reconstructed first layer video frame is obtained by downsampling and encoding an original video frame and decoding the encoded frame.

The upsampler 1050 upsamples the first layer frame to the resolution of a reconstructed second layer frame.

The interlayer filter 1040 performs interlayer filtering on an upsampled version of the first layer frame. The interlayer filtering may be performed using a de-blocking algorithm.

The second video decoding unit 1020 includes an inverse quantizer 1021, an inverse wavelet transformer 1022, and an inverse temporal filter 1023.

The inverse quantizer 1021 inversely quantizes the frames encoded by the second video coding. The inverse quantization may involve entropy decoding, inverse scanning, and a process of reconstructing wavelet-transformed frames using a quantization table.

The inverse wavelet transformer 1022 performs an inverse wavelet transform on the inversely quantized frames.

The inverse temporal filter 1023 reconstructs second layer video frames from the inversely wavelet-transformed frames using frames that have been subjected to the interlayer filtering as a reference and outputs a decoded frame (1032). The reconstructed second layer video frames are obtained by encoding original video frames and decoding the encoded frames.

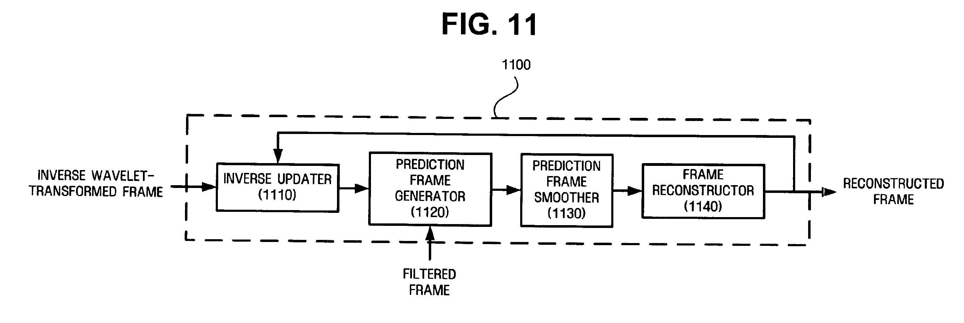

FIG. 11 is a block diagram of an inverse temporal filter 1100 according to an exemplary embodiment of the present invention.

While FIGS. 9 and 10 show that the first and second video decoding units 910 (1010) and 920 (1020) include the inverse temporal filters 913 (1013) and 923 (1023), respectively, for convenience of explanation, it is assumed in an exemplary embodiment that the temporal filter 1100 is employed in the second video decoding unit 920 shown in FIG. 9.

The inverse temporal filter 1100 reconstructs video frames from inversely wavelet-transformed frames on a GOP-by-GOP basis using MCTF. The inversely wavelet-transformed frames fed into the inverse temporal filter 1100 consist of low- and high-pass frames in which temporal redundancies have been removed during video coding. For example, when each GOP is made up of eight frames, the inversely wavelet-transformed frames may include one low-pass frame (updated frame 0) and seven high-pass frames (residual frames 1 through 7) obtained as a result of video coding.

To accomplish this function, the inverse temporal filter 1100 includes an inverse updater 1110, a prediction frame generator 1120, a prediction frame smoother 1130, and a frame reconstructor 1140.

The inverse updater 1110 updates the inversely wavelet-transformed frames in the reverse order that video coding is performed.

The prediction frame generator 1120 generates a prediction frame that will be used in reconstructing a low-pass frame or video frame from a residual frame using an interlayer filtered frame.

The prediction frame smoother 1130 smoothes a prediction frame.

The frame reconstructor 1140 reconstructs a low-pass frame or video frame from a high-pass frame using a smoothed prediction frame.

For example, when each GOP is made up of eight video frames, the inverse temporal filter 1100 uses residual frame 4 and interlayer filtered frame 0 to inversely update a low-pass frame 0.

Then, the low-pass frame 0 is used to generate a prediction frame for the residual frame 4, and the prediction frame is used to obtain low-pass frame 4 from the residual frame 4.

Then, the inverse temporal filter 1100 uses residual frames 2 and 6 and interlayer filtered frames 0 and 4 to inversely update low-pass frames 0 and 4, and then uses the low-pass frames 0 and 4 and interlayer filtered frames 2 and 6 to generate prediction frames for the residual frames 2 and 6. The prediction frames are then used to obtain low-pass frames 2 and 6 from the residual frames 2 and 6.

Subsequently, the temporal filter 1100 uses residual frames 1, 3, 5, and 7 and interlayer filtered frames 0, 2, 4, and 6 to inversely update the low-pass frames 0, 2, 4, and 6, thereby reconstructing video frames 0, 2, 4, and 6.

Lastly, the inverse temporal filter 1100 uses the reconstructed frames 0, 2, 4, and 6 and inter-layer filtered frames 1, 3, 5, and 7 to generate prediction frames for the residual frames 1, 3, 5, and 7. The prediction frames are then used to reconstruct video frames 1, 3, 5, and 7.

In the above description, each component means, but is not limited to, a software or hardware component, such as a Field Programmable Gate Array (FPGA) or an Application Specific Integrated Circuit (ASIC), which performs certain tasks. A component may advantageously be configured to reside on the addressable storage medium and configured to execute on one or more processors. Thus, a component may include, by way of example, software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more computers in a communication system.

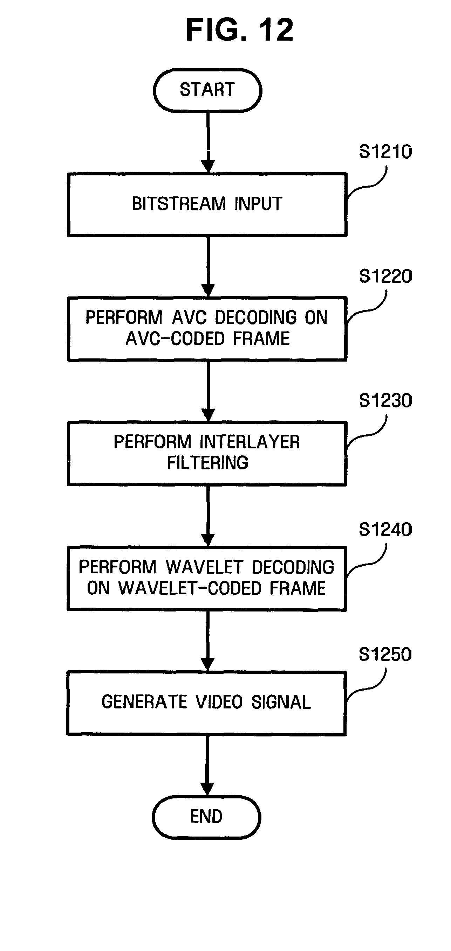

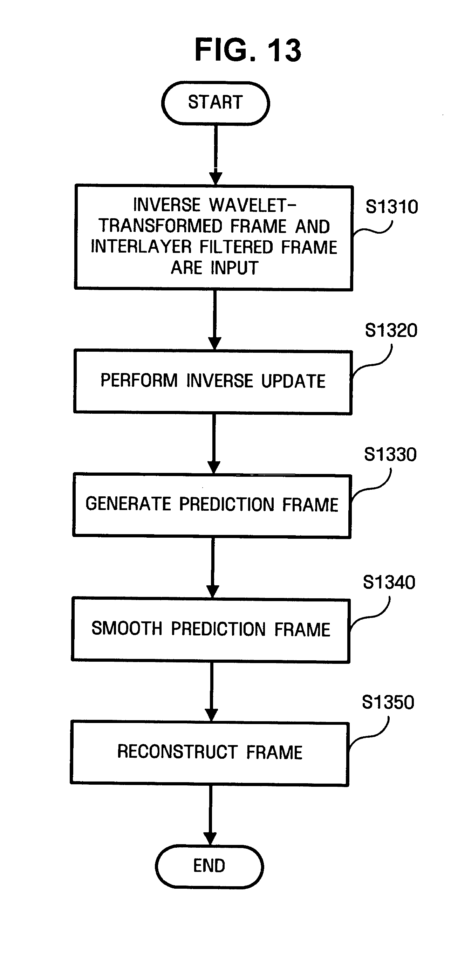

A video decoding process will now be described with reference to FIGS. 12 and 13.

FIG. 12 is a flowchart illustrating a video decoding process according to an exemplary embodiment of the present invention.

In step S1210, a video decoder receives a bitstream and extracts frames encoded by a first video coding and frames encoded by a second video coding. For example, the first and second video coding schemes may be AVC coding and wavelet coding, respectively.

In step S1220, the video decoder performs AVC decoding on the extracted AVC-coded frames.

In step S1230, the video decoder performs interlayer filtering on the frames decoded by the AVC decoding.

In step S1240, the video decoder performs wavelet decoding on the wavelet-coded frames by referring to the interlayer filtered frames.

In step S1250, after wavelet coding is finished, the video decoder uses reconstructed video frames to generate a video signal. That is, the video decoder converts luminance (Y) and chrominance (UV) color components of a reconstructed pixel into red (R), green (G), and blue (B) color components.

FIG. 13 is a flowchart illustrating a detailed process of performing inverse temporal filtering on a second layer according to an exemplary embodiment of the present invention.

Referring to FIG. 13, in step 51310, an inverse temporal filter receives inversely wavelet-transformed frames and interlayer filtered frames. The inversely wavelet-transformed frames are reconstructed on a GOP basis and consist of low- and high-pass frames.

In step S1320, the inverse temporal filter uses a high-pass frame among the inversely wavelet-transformed frames and an interlayer filtered frame to inversely update a low-pass frame.

In step S1330, the inverse temporal filter uses an inversely updated low-pass frame and an inter layer filtered frame to generate a prediction frame.

In step 51340, the inverse temporal filter smoothes the prediction frame.

In step S1350, after smoothing of the prediction frame is finished, the inverse temporal filter uses the smoothed prediction frame and a high-pass frame to reconstruct a low-pass frame or a video frame.

The present invention provides multi-layer video coding and decoding methods employing a plurality of video coding algorithms that can improve the coding efficiency using interlayer filtering.

In particular, the present invention can prevent the degradation of coding efficiency that may occur when a video coding scheme with a block-based transform algorithm and a video coding scheme with a frame-based transform algorithm are used together.

While the present invention has been particularly shown and described with reference to exemplary embodiments thereof, it will be understood by those of ordinary skill in the art that various changes in form and details may be made therein without departing from the scope of the present invention as defined by the following claims. For example, while a video encoder that employs an AVC coding method and a wavelet coding method has been described, the video encoder may employ other coding methods. Therefore, the disclosed exemplary embodiments of the invention are used in a generic and descriptive sense only and not for purposes of limitation.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video coding method comprising:
encoding video frames using a first video coding scheme;
performing interlayer filtering on the frames encoded by the first video coding scheme;
encoding the video frames using a second video coding scheme by referring to the frames subjected to the interlayer filtering; and
generating a bitstream containing the frames encoded by the first and second video coding schemes.

2. The video coding method of claim 1, wherein the first video coding scheme is an Advanced Video Coding (AVC) coding scheme and the second video coding scheme is a wavelet coding scheme.

3. The video coding method of claim 2, wherein the interlayer filtering includes upsampling the AVC-coded frames using a wavelet filter and downsampling the upsampled frames using an MPEG filter.

4. The video coding method of any preceding claim, wherein the encoding of the video frames using the second video coding scheme comprises:
performing Motion Compensation Temporal Filtering (MCTF) on the video frames by referring to the interlayer filtered frames;
performing wavelet transform on the temporally filtered frames; and
quantizing the wavelet-transformed frames.

5. The video coding method of claim 4, wherein the performing of MCTF comprises:
generating prediction frames for the video frames by referring to the interlayer filtered frames;
smoothing the prediction frames;
generating residual frames for the video frames using the smoothed prediction frames; and
updating the video frames using the residual frames.

6. A video coding method comprising:
downsampling video frames to generate video frames of low resolution;
encoding the low-resolution video frames using a first video coding scheme;
upsampling the frames encoded by the first video coding scheme to the resolution of the video frames;
performing interlayer filtering on the upsampled frames;
encoding the video frames using a second video coding scheme by referring to the frames subjected to the interlayer filtering; and
generating a bitstream containing the frames encoded by the first and second video coding schemes.

7. The video coding method of claim 6, wherein the first video coding scheme is an Advanced Video Coding (AVC) coding scheme and the second video coding scheme is a wavelet coding scheme.

8. The video coding method of claim 7, wherein the interlayer filtering includes upsampling the AVC-coded frames using a wavelet filter and downsampling the upsampled frames using an MPEG filter.

9. The video coding method of any one of claims 6 to 8, wherein the encoding of the video frames using the second video coding scheme comprises:
performing Motion Compensation Temporal Filtering (MCTF) on the video frames by referring to the interlayer filtered frames;
performing wavelet transform on the temporally filtered frames; and
quantizing the wavelet-transformed frames.

10. The video coding method of claim 9, wherein the performing of MCTF comprises:
generating prediction frames for the video frames by referring to the interlayer filtered frames;
smoothing the prediction frames;
generating residual frames for the video frames using the smoothed prediction frames; and
updating the video frames using the residual frames.

11. A video encoder comprising:
a first video coding unit (410) which is operable to encode video frames using a first video coding scheme;
an interlayer filter (440) which is operable to perform interlayer filtering on the frames encoded by the first video coding scheme;
a second video coding unit (420) which is operable to encode the video frames using a second video coding scheme by referring to the interlayer filtered frames; and
a bitstream generator (430) which is operable to generate a bitstream containing the frames encoded by the first and second video coding schemes.

12. The video encoder of claim 11, wherein the first video coding scheme is an Advanced Video Coding (AVC) coding scheme and the second video coding scheme is a wavelet coding scheme.

13. The video encoder of claim 12, wherein the interlayer filtering includes upsampling the AVC-coded frames using a wavelet filter and downsampling the upsampled frames using an MPEG filter.

14. The video encoder of any one of claims 11 to 13, wherein the second video coding unit (420) comprises:
a temporal filter (421) which is operable to perform Motion Compensation Temporal Filtering (MCTF) on the video frames by referring to the interlayer filtered frames;
a wavelet transformer (422) which is operable to perform a wavelet transform on the temporally filtered frames; and
a quantizer (423) which is operable to quantize the wavelet-transformed frames.

15. The video encoder of claim 14, wherein the temporal filter (421) comprises:
a prediction frame generator (610) which is operable to generate prediction frames for the video frames by referring to the interlayer filtered frames;
a prediction frame smoother (620) which is operable to smooth the prediction frames;
a residual frame generator (630) which is operable to generate residual frames for the video frames using the smoothed prediction frames; and
an updater (640) which is operable to update the video frames using the residual frames.

16. A video encoder comprising:
a downsampler (560) which is operable to downsample video frames to generate video frames of a low resolution;
a first video coding unit (410) which is operable to encode the low-resolution video frames using a first video coding scheme;
an upsampler (550) which is operable to upsample the frames encoded by the first video coding scheme;
an interlayer filter (440) which is operable to perform interlayer filtering on the upsampled frames;
a second video coding unit (420) which is operable to encode the video frames using a second video coding scheme by referring to the interlayer filtered frames; and
a bitstream generator (430) which is operable to generate a bitstream containing the frames encoded by the first and second video coding schemes.

17. The video encoder of claim 16, wherein the first a video coding scheme is an Advanced Video Coding (AVC) coding scheme and the second video coding scheme is a wavelet coding scheme.

18. The video encoder of claim 17, wherein the interlayer filtering includes upsampling the AVC-coded frames using a wavelet filter and downsampling the upsampled frames using an MPEG filter.

19. The video encoder of any one of claims 16 to 18, wherein the second video coding unit (420) comprises:
a temporal filter (421) which is operable to perform Motion Compensation Temporal Filtering (MCTF) on the video frames by referring to the interlayer filtered frames;
a wavelet transformer (422) which is operable to perform wavelet transform on the temporally filtered frames; and
a quantizer (423) which is operable to quantize the wavelet-transformed frames.

20. The video encoder of claim 19, wherein the temporal filter (421) comprises:
a prediction frame generator (610) which is operable to generate prediction frames for the video frames by referring to the interlayer filtered frames;
a prediction frame smoother (620) which is operable to smooth the prediction frames;
a residual frame generator (630) which is operable to generate residual frames for the video frames using the smoothed prediction frames; and
an updater (640) which is operable to update the video frames using the residual frames.

21. A video decoding method comprising:
extracting frames encoded by first and second video coding schemes from a bitstream;
decoding the frames encoded by the first video coding scheme using a first video decoding scheme and reconstructing first layer frames;
performing interlayer filtering on the reconstructed first layer frames; and
decoding the frames encoded by the second video coding scheme using a second video decoding scheme by referring to the interlayer filtered first layer frames and reconstructing second layer frames.

22. The video decoding method of claim 21, wherein the first video coding and decoding scheme is the Advanced Video Coding (AVC) scheme and the second video coding and decoding scheme is the wavelet scheme.

23. The video decoding method of claim 22, wherein the interlayer filtering includes upsampling the AVC-decoded frames using a wavelet filter and downsampling the upsampled frames using an MPEG filter.

24. The video decoding method of any one of claims 21 to 23, wherein the decoding of the frames using the second video decoding scheme comprises:
inversely quantizing the frames encoded by the second video coding scheme;
performing an inverse wavelet transform on the inversely quantized frames; and
performing inverse temporal filtering on the inversely wavelet-transformed frames using Motion Compensation Temporal Filtering (MCTF) by referring to the interlayer filtered first layer frames.

25. The video decoding method of claim 24, wherein the performing of inverse temporal filtering on the inversely wavelet-transformed frames using MCTF comprises:
inversely updating the inversely wavelet-transformed frames;
generating prediction frames by referring to the inversely updated frames and the interlayer filtered first layer frames;
smoothing the prediction frames; and
reconstructing the second layer frames by referring to the inversely updated frames and the smoothed prediction frames.

26. A video decoding method comprising:
extracting frames encoded by the first and second video coding schemes from a bitstream;
decoding the frames encoded by the first video coding scheme using a first video decoding scheme and reconstructing first layer frames;
upsampling the reconstructed first layer frames;
performing interlayer filtering on the upsampled first layer frames; and
decoding the frames encoded by the second video coding scheme using a second video decoding scheme by referring to the interlayer filtered first layer frames and reconstructing second layer frames.

27. The video decoding method of claim 26, wherein the first video coding and decoding scheme is the Advanced Video Coding (AVC) scheme and the second video coding and decoding scheme is the wavelet scheme.

28. The video decoding method of claim 27, wherein the interlayer filtering includes upsampling the AVC-decoded frames using a wavelet filter and downsampling the upsampled frames using an MPEG filter.

29. The video decoding method of any one of claims 26 to 28, wherein the decoding the frames encoded by the second video coding scheme comprises:
inversely quantizing the frames encoded by the second video coding scheme;
performing an inverse wavelet transform on the inversely quantized frames; and
performing inverse temporal filtering on the inversely wavelet-transformed frames using Motion Compensation Temporal Filtering (MCTF) by referring to the interlayer filtered first layer frames.

30. The video decoding method of claim 29, wherein the performing of inverse temporal filtering on the inversely wavelet-transformed frames using MCTF comprises:
inversely updating the inversely wavelet-transformed frames;
generating prediction frames by referring to the inversely updated frames and the interlayer filtered first layer frames;
smoothing the prediction frames; and
reconstructing the second layer frames by referring to the inversely updated frames and the smoothed prediction frames.

31. A video decoder comprising:
a bitstream interpreter (900) which is operable to extract from a bitstream frames encoded by first and second video coding schemes;
a first video decoding unit (910) which is operable to decode the frames encoded by the first video coding scheme using a first video decoding scheme and to reconstruct first layer frames;
an interlayer filter (440) which is operable to perform interlayer filtering on the reconstructed first layer frames; and
a second video decoding unit (920) which is operable to decode the frames encoded by the second video coding scheme using a second video decoding scheme by referring to the interlayer filtered first layer frames and to reconstruct second layer frames.

32. The video decoder of claim 31, wherein the first decoding unit (910) is operable to reconstruct the first layer frames using Advanced Video Coding (AVC) decoding scheme and the second decoding unit (920) is operable to reconstruct the second layer frames using a wavelet decoding scheme.

33. The video decoder of claim 32, wherein the interlayer filter is operable to upsample the frames decoded by the AVC decoding scheme using a wavelet filter and to downsample the upsampled frames using an MPEG filter.

34. The video decoder of any one of claims 31 to 33, wherein the second video decoder (920) comprises:
an inverse quantizer (911) which is operable to inversely quantize the frames encoded by the second video coding scheme;
an inverse wavelet transform unit (922) which is operable to perform an inverse wavelet transform on the inversely quantized frames; and
an inverse temporal filtering unit (913) which is operable to perform inverse temporal filtering on the inversely wavelet-transformed frames by referring to the interlayer filtered first layer frames using Motion Compensation Temporal Filtering (MCTF).

35. The video decoder of claim 34, wherein the inverse temporal filtering unit (913) comprises:
an inverse updater (1110) which is operable to inversely update the inversely wavelet-transformed frames;
a prediction frame generator (610) which is operable to generate prediction frames by referring to the inversely updated frames and the interlayer filtered first layer frames;
a prediction frame smoother (620) which is operable to smooth the prediction frames; and
a frame reconstructor (1140) which is operable to reconstruct the second layer frames by referring to the inversely updated frames and the smoothed prediction frames.

36. A video decoder comprising:
a bitstream interpreter (900) which is operable to extract frames encoded by first and second video coding schemes from a bitstream;
a first video decoding unit (910) which is operable to decode the frames encoded by the first video coding scheme using a first video decoding scheme and to reconstruct first layer frames;
an upsampler (550) which is operable to upsample the reconstructed first layer frames;
an interlayer filter (440) which is operable to perform interlayer filtering on the upsampled first layer frames; and
a second video decoding unit (920) which is operable to decode the frames encoded by the second video coding scheme using a second video decoding scheme by referring to the interlayer filtered first layer frames and reconstructs second layer frames.

37. The video decoder of claim 36, wherein the first decoding unit (910) is operable to reconstruct the first layer frames using Advanced Video Coding (AVC) decoding scheme and the second decoding unit (920) which is operable to reconstruct the second layer frames using wavelet decoding scheme.

38. The video decoder of claim 37, wherein the interlayer filter (440) is operable to upsample the upsampled first layer frames using a wavelet filter and to downsample the upsampled frames using an MPEG filter.

39. The video decoder of any one of claims 36 to 38, wherein the second video decoder comprises:
an inverse quantizer (911) which is operable to inversely quantize the frames encoded by the second video coding scheme;
an inverse wavelet transform unit (922) which is operable to perform an inverse wavelet transform on the inversely quantized frames; and
an inverse temporal filtering unit (913) which is operable to perform inverse temporal filtering on the inversely wavelet-transformed frames by referring to the interlayer filtered first layer frames using Motion Compensation Temporal Filtering (MCTF).

40. The video decoder of claim 39, wherein the inverse temporal filtering unit (913) comprises:
an inverse updater (1110) which is operable to inversely update the inversely wavelet-transformed frames;
a prediction frame generator (610) which is operable to generate prediction frames by referring to the inversely updated frames and the interlayer filtered first layer frames;
a prediction frame smoother (620) which is operable to smooth the prediction frames; and
a frame reconstructor (1140) which is operable to reconstruct the second layer frames by referring to the inversely updated frames and the smoothed prediction frames.

41. A recording medium having a computer readable program recorded therein, the program for executing a video coding method comprising:
encoding video frames using a first video coding scheme; performing interlayer filtering on the frames encoded by the first video coding scheme;
encoding the video frames using a second video coding scheme by referring to the frames subjected to the interlayer filtering; and
generating a bitstream containing the frames encoded by the first and second video coding schemes.

42. A recording medium having a computer readable program recorded therein, the program for executing a video coding method comprising:
downsampling video frames to generate video frames of low resolution;
encoding the low-resolution video frames using a first video coding scheme;
upsampling the frames encoded by the first video coding scheme to the resolution of the video frames;
performing interlayer filtering on the upsampled frames;
encoding the video frames using a second video coding scheme by referring to the frames subjected to the interlayer filtering; and
generating a bitstream containing the frames encoded by the first and second video coding schemes.

43. A recording medium having a computer readable program recorded therein, the program for executing a video decoding method comprising:
extracting frames encoded by first and second video coding schemes from a bitstream;
decoding the frames encoded by the first video coding scheme using a first video decoding scheme and reconstructing first layer frames;
performing interlayer filtering on the reconstructed first layer frames; and
decoding the frames encoded by the second video coding scheme using a second video decoding scheme by referring to the interlayer filtered first layer frames and reconstructing second layer frames.

44. A recording medium having a computer readable program recorded therein, the program for executing a video decoding method comprising:
extracting frames encoded by the first and second video coding schemes from a bitstream;
decoding the frames encoded by the first video coding scheme using a first video decoding scheme and reconstructing first layer frames;
upsampling the reconstructed first layer frames;
performing interlayer filtering on the upsampled first layer frames; and
decoding the frames encoded by the second video coding scheme using a second video decoding scheme by referring to the interlayer filtered first layer frames and reconstructing second layer frames.
